Europäisches Patentamt

(19) European Patent Office   (11) Numéro de publication: **0 086 168**

Office européen des brevets   **B1**

(12) **FASCICULE DE BREVET EUROPÉEN**

(45) Date de publication du fascicule du brevet:
**21.09.88**

(21) Numéro de dépôt: **83430003.0**

(22) Date de dépôt: **03.02.83**

(51) Int. Cl.⁴: **A 01 K 61/00**

(54) **Procédé et installation d'aquaculture.**

(30) Priorité: **04.02.82  FR 8201950**

(43) Date de publication de la demande:
**17.06.83 Bulletin 83/33**

(45) Mention de la délivrance du brevet:
**21.09.88 Bulletin 88/38**

(84) Etats contractants désignés:
**AT BE CH DE FR GB IT LI LU NL SE**

(56) Documents cité:
**FR-A-2 342 025**
**US-A-3 495 572**
**US-A-3 916 833**
**US-A-4 213 421**

(73) Titulaire: **Société d'Etudes et d'Aquaculture
Normalisée - S.E.A.N. Sociéte à Responsabilité
Limitée dite:, 4 rue Verdillon, F-13010 Marseille
(FR)**

(72) Inventeur: **Martin, André, 49, Boulevard Cunéo,
F-83000 Toulon (FR)**

(74) Mandataire: **Moretti, René, C/O Cabinet BEAU DE
LOMENIE 14, rue Raphael, F-13008 Marseille (FR)**

## Description

La présente invention a pour objet une installation et un procédé d'aquaculture.

Le secteur technique de l'invention est celui de l'élevage d'espèces marines et plus particulièrement l'élevage de poissons.

On connaît déjà des procédés et des installations d'aquaculture comportant notamment des bassins dans lesquels sont élevés des poissons ou autres espèces d'animaux aquatiques.

De telles installations sont décrites dans le brevet FR-A-2 342 025 et dans le brevet US-A-4 213 421.

Le brevet FR-A-2 342 025 concerne un procédé d'élevage et d'entretien intensif d'animaux aquatiques tels que des poissons, des coquillages, des écrevisses et analogues, en eau douce ou en eau de mer dont la température est contrôlée et purifiée au cours de son recyclage avec utilisation d'une clarification par boues activées comportant des étapes de préclarification et de postclarification. Une installation comportant les caractéristiques du préambule de la revendication 1 est également décrite.

Le brevet US-A-4 213 421 a pour objet un procédé et une installation pour élever des animaux marins dans des réservoirs remplis d'eau de mer en produisant et fournissant une nourriture naturelle à base de protéines sous la forme de compositions de planctons vivants sélectionnés pour la nutrition parfaite d'animaux marins, mis en grande quantité dans des réservoirs sous des conditions naturelles et où ils sont protégés des parasites et infections, en vue d'obtenir des animaux marins adultes susceptibles d'être commercialisés pour la consommation humaine.

La présente invention propose un autre mode d'élevage de poissons.

L'objectif de la présente invention est la mise en oeuvre de l'élevage de poissons dans des bassins artificiels ou naturels, tels que par exemple des marais ou des claires existant en bordure de mer et calibrés pour la circonstance et cela à partir d'un faible investissement.

Cet objectif est atteint par l'installation d'aquaculture comprenant au moins trois bassins de volumes différents remplis d'eau de mer et communiquant entre eux pour établir une circulation de l'eau en circuit fermé à travers une unité de traitement de l'eau, caractérisée en ce qu'elle comporte notamment un bassin de plus grand volume constituant une réserve d'eau; un bassin d'élevage de plus petit volume et un bassin de volume intermédiaire servant à réaliser l'équilibre biothermique des circuits d'eau de l'installation, dont le volume total d'eau de l'installation est de 5 à 8 fois, de préférence 6 fois supérieur au volume d'eau du plus petit bassin dans lequel on élève des poissons.

Le volume total d'eau de l'installation est de 1,5 à 3 fois, de préférence 2 fois, supérieur au volume d'eau du plus grand bassin, de réserve d'eau et de 3 à 5 fois, de préférence 4 fois, supérieur au volume d'eau du bassin intermédiaire, lequel bassin intermédiaire est situé entre le bassin de réserve d'eau et le bassin d'élevage et est rapproché de celui-ci.

La profondeur du bassin de réserve d'eau est supérieure à celle dudit bassin intermédiaire, lequel est d'une profondeur supérieure à la profondeur du bassin d'élevage et la communication des bassins entre eux s'effectue à une certaine distance du fond des bassins pour réserver une zone de décantation des matières lourdes se développant ou étant contenues dans l'eau de l'installation.

Les bassins communiquent entre eux par leurs extrémités opposées, de telle sorte que l'eau circule dans le sens longitudinal des bassins dans des directions opposées d'un bassin à l'autre pour produire un effet lagunaire et favoriser la décantation des matières lourdes contenues dans l'eau de l'installation.

Chaque bassin, dans un mode de réalisation, est recouvert d'une bâche en matériau transparent tendue au-dessus de l'eau et à une distance proche de sa surface pour d'une part, éviter les déperditions calorifiques et d'autre part obtenir un apport de calories par effet de serre pendant les périodes d'ensoleillement.

Les bassins sont orientés d'Est en Ouest et ledit bassin intermédiaire et le bassin d'élevage comportent une serre qui recouvre lesdites bâches.

L'unité de traitement de l'eau se compose dans un mode de réalisation, d'amont en aval:
a)  - d'un bac de décantation qui reçoit l'eau polluée provenant du bassin d'élevage;
b)  - d'un régulateur du Ph de l'eau;
c)  - d'un filtre mécanique pour arrêter les plus grosses particules véhiculées par le courant;
d)  - d'un bac biologique comportant des éléments filtrants pour arrêter les plus petites particules et favoriser le développement de bactéries nitrifiantes;
e)  - d'un bassin de réception de l'eau traitée comportant une conduite de distribution de l'eau pour alimenter ledit bassin de réserve d'eau.

L'eau provenant du bac de décantation surverse sur des coquilles d'huitres pour réguler le Ph de l'eau.

Le filtre mécanique est alimenté en source par l'eau provenant du régulateur du Ph de l'eau et comporte des éléments filtrants parallèles entre eux, espacés les uns des autres et s'étendant transversalement au courant de l'eau.

Le bac biologique est alimenté par l'eau provenant du filtre mécanique et s'écoulant par des surverses disposées à sa partie supérieure et comporte plusieurs éléments parallèles entre eux, espacés les uns des autres et s'étendant transversalement au courant de l'eau, lesquels se composent chacun de deux grillages distants l'un de l'autre pour réserver entre eux un espace, le grillage situé en amont, étant formé de mailles de plus forte section, le grillage situé en aval, étant formé de mailles de plus petite section. L'espace réservé entre les deux grillages constitue une zone de contre-courant pour favoriser le développement des bactéries nitrifiantes sur les faces du grillage à petites mailles.

Dans un mode de réalisation, le filtre mécanique se compose d'éléments formés de grillages à mailles dégressives d'amont en aval, allant de 8 mm. à 2,5 mm.

Chaque élément du filtre biologique se compose, en amont, d'un grillage formé de mailles de 2,5 mm à 8 mm., de préférence 5 mm. et en aval d'un grillage formé de mailles de 0,5 mm. à 2 mm., de préférence 1 mm.

Le filtre mécanique et/ou le filtre biologique comportent en outre, en aval desdits éléments à mailles, au moins un élément filtrant supplémentaire constitué par une plaque de mousse à cellules ouvertes d'une densité comprise entre 0,8 Kg/m$^3$ et 1,2 Kg/m$^3$.

L'installation selon l'invention comporte également un régulateur thermique solaire de la température de l'eau de l'installation, lequel est disposé à la sortie du filtre biologique et rejette l'eau dans au moins un desdits bassins à travers une vanne de régulation reliée à un enregistreur en continu de la température des bassins.

Ledit régulateur solaire se compose d'un boîtier dont le fond et les parois latérales sont calorifugées et dans lequel sont disposés un collecteur d'arrivée et un collecteur de départ de l'eau, reliés l'un à l'autre par une pluralité de tubes de petits diamètres compris entre 5 mm. et 10 mm., de préférence 8 mm., lesquels sont disposés devant la face supérieure du boîtier, constituée par un couvercle amovible transparent.

Lesdits collecteurs sont superposés l'un l'autre et les tubes constituent des boucles en forme d'épingle à cheveux dont les branches sont décalées l'une par rapport à l'autre pour être an permanence sous le rayonnement solaire.

Dans un mode préférentiel de réalisation, les collecteurs sont situés du côté de la partie supérieure du boîtier et s'étendent parallèlement à l'un des bords latéraux et en ce que les épingles sont inclinées du côté du fond du boîtier et s'étendent à partir des collecteurs jusqu'à approcher le bord latéral du boîtier opposé à celui devant lequel se touvent lesdits collecteurs.

L'invention concerne également un procédé d'aquaculture mis en oeuvre dans une installation comprenant au moins trois bassins de volumes différents remplis d'eau de mer et reliés entre eux pour permettre la circulation de l'eau en circuit fermé à travers une unité de traitement de l'eau, caractérisé en ce que dans ladite installation comprenant:
- au moins un bassin de réserve d'eau (1),
- au moins un bassin intermédiaire (2) servant à réaliser l'équilibre biothermique des circuits d'eau de l'installation,
- au moins un bassin d'élevage (3),

dont le volume total d'eau de l'installation est de 1, 5 à 3 fois, de préférence 2 fois, supérieur au volume d'eau du bassin de réserve d'eau (1); de 3 à 5 fois, de préférence 4 fois, supérieur au volume d'eau du bassin intermédiaire (2) et de 5 à 8 fois, de préférence 6 fois, supérieur au volume d'eau du bassin d'élevage (3),
- on élève conjointement des poissons et des coquillages dans le plus petit bassin (3) lesquels coquillages sont associés aux poissons pour éliminer le phyto-plancton qui se développe naturellement dans l'installation.

Dans un autre mode de mise en oeuvre dudit procédé, on élève conjointement des poissons et des coquillages dans le bassin d'élevage et on élève des coquillages dans le bassin intermédiaire.

Avec les poissons, on élève de préférence des bivalves.

Selon le procédé, on maintient le Ph de l'eau à une valeur comprise dans la fourchette de 7,5 à 8,5, de préférence 7,68 à 8,34, en mettant l'eau au contact de coquilles d'huitres.

Le résultat de l'invention consiste en l'élevage associé, en bassins naturels ou artificiels de poissons/coquillages en circuit fermé, chauffé.

Dans le but de bénéficier d'un bon ensoleillement, les bassins sont de préférence orientés d'Est en Ouest.

Les résultats positifs obtenus par l'installation et le procédé selon l'invention dépendent du bon équilibre de la biomasse des bassins, cet équilibre étant obtenu par le traitement de l'eau de l'installation du fait de l'élimination de l'ammoniaque et la transformation des nitrites en nitrates par élimination du phyto-plancton, lequel est absorbé par les coquillages; par l'oxygénation de l'eau et le maintien en permanence de la température de l'eau des bassins entre 13 et 20°C, ce qui a pour effet de favoriser la production des espèces élevees.

Les caractéristiques de l'invention et d'autres avantages assortiront encore de la description suivante uniquement donnée à tire d'exemple d'un mode de réalisation d'une installation mettant en oeuvre le procédé selon l'invention, en référence au dessin sur lequel:
- la figure 1 est une vue en coupe schématique d'une installation d'aquaculture selon l'invention;
- la figure 2 est une vue de dessus de l'installation de la figure 1, laquelle est située à proxmité d'une réserve naturelle;
- la figure 3 est une vue en coupe d'une unité de traitement de l'eau, équipant l'installation selon l'invention;
- la figure 4 est une vue en coupe d'un élément du filtre biologique composant l'unité de traitement représentée à la figure 3;
- la figure 5 est une vue de dessus d'un régulateur thermique solaire équipant l'installation d'aquaculture selon l'invention;
- la figure 6 est une vue en coupe transversale du régulateur thermique illustré à la figure 5.

La mise en oeuvre du procédé selon l'invention et son succès étant dépendant du bon équilibre de la biomasse des bassins composant l'installation, une attention particulière a été portée sur le traitement de l'eau, la charge des bassins, l'élimination du phyto-plancton, l'oxygénation de l'eau et sa température ainsi qu'un Ph approprié légèrement alcalin.

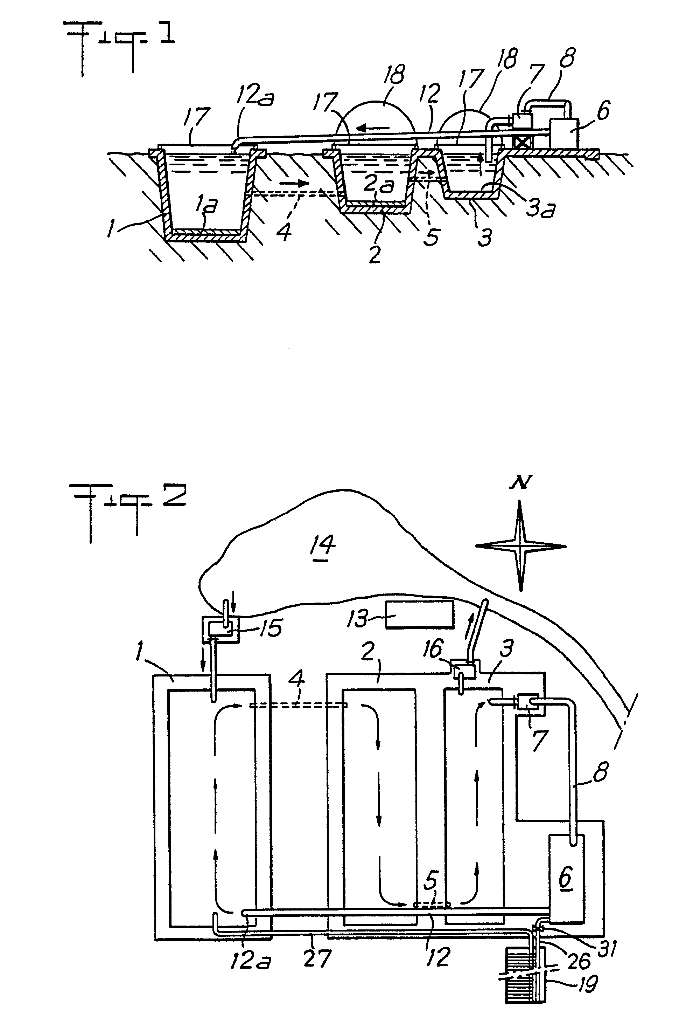

Un mode de réalisation d'une installation d'aquaculture mettant en oeuvre le procédé selon l'invention est illustré en référence au dessin annexé dont la figure 1 est une coupe longitudinale de l'ensemble des bassins.

L'installation comporte, de préférence, trois bassins de valumes différents:
- un premier bassin 1 constituant une réserve d'eau faisant office d'accumulateur thermique du fait de son volume et de sa profondeur. Ce bassin est le plus grand et le plus profond des trois bassins;
- un second bassin 2, dont la fonction est de réaliser le traitement partiel de l'eau de l'installation par effet lagunaire;
- l'équilibre thermique de l'eau;
- une zone de développement du photo-plancton,
  ce bassin est d'un plus petit volume et d'une profondeur moindre que ceux du bassin de réserve d'eau 1.

Enfin un troisième bassin 3, dans lequel on fait l'élevage des poissons, par exemple des bars; ce bassin est le plus petit des trois, son volume et sa profondeur sont inférieurs à ceux du bassin d'équilibre biothermique 2.

Selon l'invention, l'installation comporte au moins trois bassins orientés d'Est en Ouest. Elle peut cependant en comprendre davantage. Toutefois, on retrouvera toujours un ensemble d'au moins deux bassins rapprochés l'un de l'autre: un bassin d'équilibre biothermique 2 et au moins un bassin d'élevage 3. On peut concevoir plusieurs bassins de réserve d'eau 1, plus ou moins éloignés dudit ensemble de bassins 2/3. Dans cette conception, les bassins 1 sont reliés entre eux et en communication avec le bassin réserve 2. On peut également concevoir plusieurs bassins d'élevage 3 reliés chacun audit bassin d'équilibre biothermique 2.

Tel que cela est illustré sur le dessin, ces bassins sont d'un contour rectangulaire et d'une section droite trapézoïdale et communiquent entre eux par des conduites 4/5 enterrées et situées aux extrémités opposées des bassins.

Selon l'exemple choisi, la conduite 4 est située du côté de l'extrémité Nord des bassins de réserve d'eau 1 et d'équilibre biothermique 2, la conduite 5 est située du côté de l'extrémité Sud du bassin d'équilibre biothermique 2 et du bassin d'élevage 3.

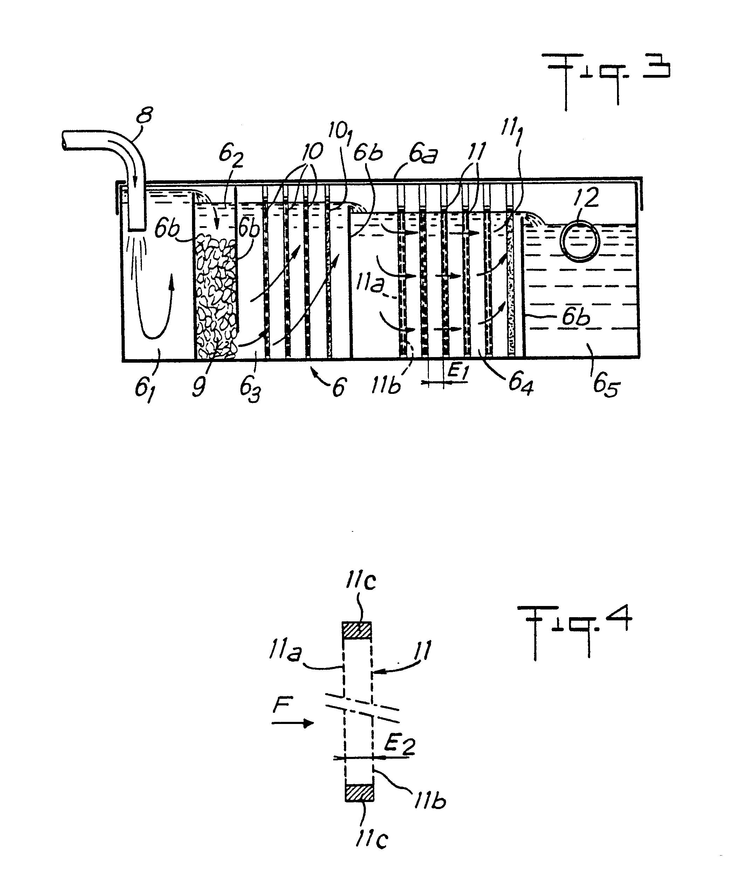

Les conduites 4/5 débouchent à une certaine distance du fond des bassins 1a/2a/3a, de telle sorte à réserver une zone exempte de turbulences et favorable au dépôt des déchets et autres matières lourdes. La circulation d'un bassin à l'autre se fait en opposition tel que l'illustre le sens des flèches à la figure 2.

L'installation comporte encore une unité de traitement de l'eau de l'installation, laquelle unité est contiguë au bassin d'élevage 3. L'eau polluée pompée dans le bassin d'élevage 3 au moyen d'une moto-pompe 7 est envoyée par la tubulure 8 dans l'unité de traitement 6.

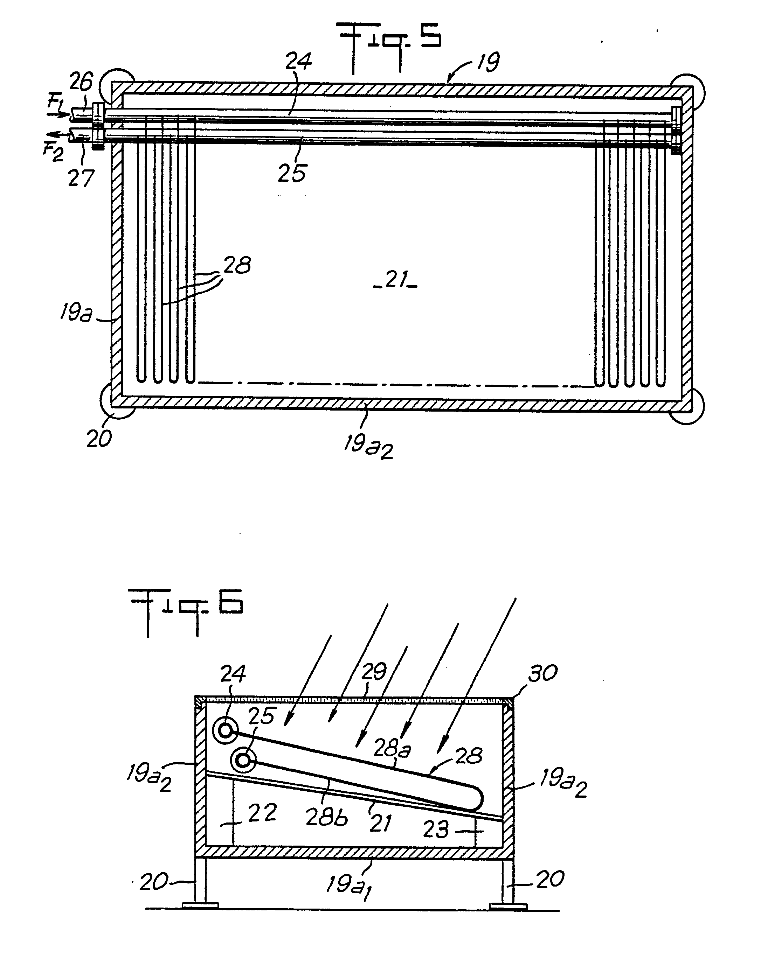

Celle-ci, illustrée à la figure 3 se présente sous la forme d'un bac parallélépipédique, éventuellement fermé par un couvercle 6a et comporte plusieurs compartiments délimités par des cloisons 6b s'étendant transversalement au bac 6. Il comprend un compartiment de décantation $6_1$ dans lequel aboutit la tubulure 8 qui déverse l'eau en provenance du bassin d'élevage 3. Le compartiment $6_1$ surverse dans un deuxième compartiment $6_2$ rempli de coquilles d'huitres 9. Les coquilles d'huitres 9, contenues dans ledit compartiment $6_2$, ont pour fonction de réaliser la régulation du Ph de l'eau, lequel est maintenu à une valeur comprise entre 7,68 et 8,34 par des prélèvements et des analyses effectués périodiquement et en modifiant la quantité de coquillages en fonction des résultats obtenus au cours des prélèvements et des analyses.

Le compartiment $6_2$ communique par le fond avec un compartiment $6_3$. Celui-ci, appelé filtre mécanique, comporte plusieurs éléments filtrants 10, par exemple trois tamis à mailles dégressives: un tamis ayant des mailles de 8 mm., un tamis ayant des mailles de 5 mm. et un autre ayant des mailles de 2,5 mm. Ces tamis sont parallèles entre eux et s'étendent transversalement au bac 6. Ils sont disposés sur des cadres et sont montés dans des glissières fixées aux parois latérales du bac, de telle sorte que l'on puisse les retirer du compartiment $6_3$ en vue de leur nettoyage.

La fonction des éléments filtrants à mailles est d'arrêter au passage les grosses particules en suspension dans le courant de l'eau, par exemple des algues flottantes ou autres...

Le compartiment $6_3$ comporte également un ou plusieurs éléments filtrants supplémentaires $10_1$ pour arrêter les plus fines particules ayant traversé les éléments à mailles 10. Ces éléments sont réalisés à partir d'une plaque de mousse à cellules ouvertes, par exemple de la mousse de polyuréthane. Cette plaque est montée comme les éléments filtrants à mailles 10 et est d'une épaisseur comprise par exemple entre 25 mm. et 50 mm. La mousse est d'une densité allant de 0,8 Kg/m³ à 1,2 Kg/m³.

Le compartiment $6_3$ surverse dans un compartiment $6_4$, appelé bac biologique, dans lequel sont disposés plusieurs éléments filtrants parallèles entre eux, dont certains comportent chacun deux tamis, par exemple cinq filtres 11. Ces filtres s'étendent transversalement au bac 6 et se composent chacun de deux tamis 11a/11b, montés sur un cadre 11c (fig. 4). Par rapport au sens de la circulation de l'eau, illustré par la flèche F, le premier tamis 11a est formé de très petites mailles ayant de préférence 5 mm. de côté, le second 11b est forme de de très petites mailles, de préférence de 1 mm. de côté. Les tamis 11a/11b sont espacés l'un de l'autre d'une distance $E_2$ étant de préférence de l'ordre de 5 cm. L'espace entre les deux tamis 11a/11b a été réservé pour créer une zone de contre-courant entre les tamis afin de favoriser le développement de bactéries nitrifiantes sur les faces du tamis à mailles fines 11b.

Les filtres 11 sont distants l'un de l'autre d'une distance $E_1$ comprise entre 20 et 40 centimètres. Les particules ayant pu traverser le filtre mécanique $6_3$ sont arrêtées par les tamis à mailles 11a.

Les filtres 11 sont montés coulissants dans des glissières fixées aux parois latérales du bac 6.

L'excès de matières en suspension augmentant la turbidité de l'eau, cet état de fait réduit l'activité photosynthétique si bien que les effets du rayonnement solaire n'agissent plus de la même façon sur la tranche d'eau des bassins. L'effet de photosynthèse n'agit plus qu'en surface favorisant ainsi le développement de certains micro-éléments végétaux ou animaux, ce qui à certaines concentrations est nuisible. On a donc été amené à ajouter dans le compartiment biologique $6_4$ des moyens pour bloquer au passage le maximum de micro-éléments, de les exterminer par changement de milieu puis de les décomposer par le travail des bactéries. Plus le taux de micro-éléments décédés est important, plus le développement des bactéries sera important, ce qui favorise l'élimination de l'ammoniaque et la transformation des nitrites en nitrates.

Ainsi et dans le but d'améliorer la transparence de l'eau et le développement des bactéries nitrifiantes, le compartiment biologique $6_4$ comporte, outre les éléments filtrants à mailles 11, un ou plusieurs éléments $11_1$ réalisés à partir d'une plaque de mousse à cellules ouvertes, enchâssés dans un cadre monté coulissant sur des glissières fixées aux parois latérales du bac 6.

Comme l'élément $10_1$, l'élément $11_1$ est réalisé à partir d'une couche de mousse par exemple de polyuréthane d'une épaisseur comprise entre 25 mm. et 50 mm. et dont la densité est comprise entre 0,8 Kg/m$^3$ à 1,2 Kg/m$^3$.

L'élément $11_1$ constitue un support de bactéries favorisant le développement des bactéries nitrifiantes.

L'eau traitée et provenant du bac biologique $6_4$ surverse dans un compartiment $6_5$, encore appelé bassin de distribution de l'eau, dans lequel débouche sensiblement au niveau de l'eau, une conduite 12, qui s'étend au-dessus des bassins 2 et 3, pour rejeter l'eau traitée dans le bassin de réserve d'eau 1 et du côté de l'extrémité sud de celui-ci. La circulation de l'eau dans l'installation s'établit en un circuit ferme tel que l'illustre les flèches à la figure 2.

L'oxygénation de l'eau est obtenue par écoulement en cascade dans l'unité de traitement 6 et à l'extrémité 12a de la conduite 12.

En fonction des besoins, l'oxygénation peut également être résolue au moyen d'un compresseur d'air dont la conduite de sortie est immergée dans le bassin vie 3, lequel compresseur est installé dans un local technique 13, comprenant également des tableaux électriques, un groupe électrogène de secours et différents appareillages de contrôle et de mesures.

Selon l'invention seul environ le sixième ou le septième du volume total de l'eau de l'installation est utilisé pour l'élevage des poissons dans le bassin d'élevage 3, le restant étant soit en cours de traitement, soit en circulation dans l'ensemble de l'installation et notamment dans le bassin de réserve d'eau 1, dont le volume est environ la moitié du volume total de l'installation et dans le bassin d'équilibre biothermique 2, dont le volume est environ le tiers ou le quart du volume de l'ensemble de l'installation. La circulation de l'eau dans lesdits bassins, du fait de leur mode de communication entre eux dont les conduits 4/5 débouchent au-dessus du fond des bassins et au moins à quarante centimètres dudit fond, produit un effet lagunaire au cours des échanges des masses d'eau. Les matières lourdes et les déchets déposés dans les bassins sont enlevés périodiquement, environ tous les ans à l'occasion de leur récurage.

Il a été en effet constaté que le rendement de l'installation en vue du grossissement des poissons était maximum en faisant l'élevage dans un ensemble de bassins agencéss et conformés tel que cela vient d'être décrit et dans des bassins dont les volumes ne doivent pas s'écarter sensiblement de ceux énoncés ci-avant. Une tolérance est cependant envisageable concernant lesdits volumes. En effet, les conditions optimales sont maintenues en faisant l'élevage des poissons dans des bassins dont le volume par rapport au volume total d'eau de l'installation est compris dans les fourchettes suivantes:
- Le volume total d'eau de l'installation est de 5 à 8 fois, de préférence 6 fois, supérieur au volume d'eau du plus petit bassin 3 dans lequel est fait l'élevage des poissons; de 3 à 5 fois, de préférence 4 fois, supérieur au volume d'eau du bassin d'équilibre biothermique 2 et 1,5 à 3 fois, de préférence 2 fois, supérieur au volume d'eau du plus grand bassin de réserve d'eau 1.

Dans le but de faire l'élevage de plusieurs variétés de poissons, par exemple des bars, des turbots et autres, dans différents bassins, l'installation peut comporter plusieurs bassins d'élevage 3 mais dans ce cas, le volume total d'eau de l'installation est de 5 à 8 fois, de préférence 6 fois, supérieur à la somme des volumes d'eau desdits bassins 3.

Le traitement de l'eau par élimination de l'ammoniaque, la transformation du nitrite en nitrate et l'effet lagunaire favorisent le développement du phyto-plancton qu'il convient d'éliminer.

Selon le procédé, on supprime le phyto-plancton en élevant ensemble des poissons et des coquillages, par exemple des bivalves. Ces derniers pouvant être des huitres, des palourdes, des clovisses ou tous autres coquillages comestibles pour rentabiliser l'installation.

Le phyto-plancton est absorbé par les coquillages, lesquels sont introduits dans le bassin d'élevage 3 et dans le bassin d'équilibre biothermique 2.

En fonction du niveau de l'eau dans les bassins 1, 2 et 3, un complément en eau vive de mer peut être déversé dans le bassin de réserve d'eau 1, l'eau étant pompée dans une réserve naturelle 14, au moyen d'une moto-pompe 15.

Les paramètres déterminants: ammoniaque et oxygène dissouts sont contrôlés périodiquement. En fonction de la charge en matières indésirables, déchets et autres, dans le bassin d'élevage 3, l'installation est conçue pour permettre une circulation de l'eau en circuit fermé, à travers l'unité de traitement en vue d'éliminer lesdites matières et produire dans lebac biologique 6₄, les bactéries nitrifiantes nécessaires.

Dans un mode de réalisation, le débit en circuit fermé à travers ladite unité est de 30 m³/h. En cas de nécessité, on prévoit de rincer le circuit en pompant dans la réserve naturelle 14 au moyen de la moto-pompe 15 à un débit pouvant atteindre 40 m³/h. avec un rejet à l'extérieur des bassins en rejetant l'eau pompée par une moto-pompe 16, dont la tubulure d'aspiration est plongée dans le bassin d'élevage 3, par exemple dans le bras de mer mettant en communication la réserve naturelle 14 avec la mer.

Pour améliorer le cycle de grossissement des poissons, par exemple des bars, on maintient en permanence la température de l'eau dans l'ensemble de l'installation entre 15°C et 25°C.

Dans le cas de l'élevage de poissons tropicaux, la température est maintenue dans la fourchette de 25°C à 32°C.

Pendant la période hivernale et selon un mode de chauffage, pour maintenir la température de l'eau dans les fourchettes ci-dessus, on immerge dans le bassin d'équilibre biothermique 2, des thermoplongeurs, l'énergie électrique étant produite par le groupe électrogène installé dans le local technique 13.

Dans le but d'économiser l'énergie, on utilise l'énergie solaire en mettant en oeuvre un ou plusieurs capteurs dans lesquels circule l'eau de l'installation ou un fluide caloporteur traversant des serpentins immergés dans l'eau des bassins.

Afin d'éviter au maximum les pertes calorifiques, au niveau du bassin d'élevage 3 et du bassin d'équilibre biothermique 2, on dispose au-dessus de ces deux bassins, des bâches transparentes 17, par exemple en PVC, lesquelles sont tendues environ à cinquante centimètres au-dessus des bassins 2/3 et on recouvre lesdites bâches 17 par des serres 18, par exemple des serres-tunnel formées d'arceaux supportant des feuilles de matière plastique pouvant également être en PVC. En variante, une seule serre peut recouvrir les bassins 2 et 3.

Le bassin de réserve d'eau 1 n'est recouvert que par des bâches réalisées à partir d'un film de matière plastique transparente, appelé film thermique, disposées de telle sorte à être le plus près possible du niveau de l'eau dans le but de réaliser un cumulus solaire.

Ce film est obtenu à partir d'une matière permettant le passage de rayonnement solaire dans la plage totale du spectre et retenir captives un certain nombre de longueurs d'ondes du spectre infrarouge (fenêtre atmosphérique).

Il a été précédemment exposé que l'un des paramètres importants pour optimiser le rendement de l'installation est la température. Un bon contrôle de ce paramètre dans la fourchette de 15°C à 25°C en hiver comme en été, pour l'élevage des poissons d'eau tempérée, permet d'obtenir un taux de croissance particulièrement intéressant pour les poissons comme pourles bivalves.

L'effet de serre et le fait d'avoir des bassins creusés dans le sol sont des facteurs qui contribuent favorablement à une réduction des pertes de calories. Il s'avère cependant indispensable, en fonction des saisons, de pouvour soit ajouter des calories, soit en enlever pour maintenir la température de l'eau des bassins dans la fourchette précitée: 15°C à 25°C.

Le principe retenu pour réaliser la régulation thermique de l'eau est le suivant: chauffage par l'énergie solaire en maintenant un écart de température $\Delta t$ faible de l'ordre de 2°C à 5°C entre l'entrée du dispositif de chauffage solaire et la sortie de ce dispositif, ce qui implique le choix d'un débit de fluide relativement important qu'il faut exposer au rayonnement infrarouge solaire le temps nécessaire.

Le choix d'un $\Delta t$ faible offre deux avantages:
- on obtient d'une part du dispositif de chauffage solaire le rendement optimum quelque soit l'ensoleillement;
- on prévient la destruction de la biomasse en évitant un choc thermique trop important.

La régulation de la température de l'eau est résolue en dotant l'installation d'un régulateur thermique solaire 19 (figures 2, 5 et 6), disposé à la sortie du filtre biologique 6 et mis en charge pour permettre la circulation de l'eau dans son réseau tubulaire.

Le régulateur thermique solaire 19 se compose d'un boîtier parallélépipédique 19a dont le fond 19a et les parois latérales 19a₂ sont calorifugées, lequel boîtier est par exemple monté sur des piétements 20.

Dans le boîtier 19a est disposée une plaque 21 qui occupe la totalité de l'espace interne du boîtier, laquelle plaque est inclinée vers le bas et s'étend d'une des parois longitudinales à l'autre en étant supportée par des cales 22/23. Au-dessus de la partie la plus élevée de la plaque 21 sont montés deux collecteurs 24/25 parallèles entre eux et aux parois longitudinales 19a₂, juxtaposées et superposées: un collecteur 24 ou

collecteur d'entrée de l'eau, lequel est relié par une tubulure 26 au filtre 6 et un collecteur 25 de départ de l'eau relié par une tubulure 27 au plus grand bassin de réserve d'eau 1. Les deux collecteurs 24/25 communiquent entre eux au moyen de plusieurs tubes de petite section constituant des boucle sen forme d'épingle à cheveux 28 dont une branche 28a est fixée au bord d'un orifice réservé dans le collecteur 24 et l'autre 28b est fixée au bord d'un orifice réservé dans le collecteur 25. L'eau en provenance du filtre biologique 6 entre dans le régulateur thermique dans le sens de la flèche F1, parcourt le collecteur 24, le réseau d'épingles 28, le collecteur 25 et est rejetée dans le sens de la flèche F2 dans le bassin de réserve d'eau 1.

De préférence, la plaque 21 et les tubulures 24/25/28 sont de couleur noire pour favoriser l'absorption des rayonnements infrarouges.

Le régulateur comporte une pluralité de tubes en forme d'épingle 28 dont le nombre est par exemple de l'ordre de cent cinquante à deux cents. A la partie supérieure, il comporte également une paroi transparente 29, laquelle est composée d'un film de matière plastique tendu sur un cadre 30 adoptant le contour du boîter 19, ou encore d'une vitre enchâssée dans ledit cadre.

De préférence, on utilise un film en matière plastique qui retient le rayonnement infrarouge rémanent. L'eau en provenance du filtre biologique 6, entre dans le régulateur 19 à une vitesse par exemple de l'ordre de 2,80 m/s. Après être passée dans le réseau de tubes 24/25/28, elle ressort du régulateur à une vitesse par exemple de l'ordre de 1,80 m/s sous un débit par exemple de l'ordre de 14 m$^3$/h.

Le chauffage de l'eau s'effectue pendant les heures du jour où l'incidence solaire est de l'ordre de 30°C à 45°C maximum.

La régulation de la température de l'eau est obtenue par ou verture ou fermeture d'une vanne 31 manuelle, en fonction des indications données par un enregistreur situé dans le local technique 13 et qui donne en permanence la température de l'eau des bassins, la quantité d'oxygène dissout et le degré de salinité de l'eau. La vanne 31 est montée sur la tubulure 26, en amont du régulateur 19 et en aval du filtre biologique 6. Cette vanne 31 peut également être une vanne thermostatique reliée audit enregistreur pour réguler automatiquement et en permanence la température de l'eau ainsi que les autres paramètres donnés par l'enregistreur.

En fonction de l'ensoleillement et de la température de l'eau des bassins, on règle le débit en agissant sur la vanne 31 en maintenant un faible écart de température.

Pour obtenir le refroidissement de l'eau des bassins, on enlève la paroi transparente 29 et on ouvre la vanne 31 pour faire fonctionner le régulateur 19 à son débit maximum pendant la nuit.

L'eau provenant du filtre biologique 6 est refroidie par effet exothermique pendant son passage dans le réseau de tubes du régulateur 19.

Le refroidissement peut également être obtenu par un réfrigérant placé dans le boîtier 19.

**Revendications**

1. Installation d'aquaculture comprenant au moins trois bassins (1, 2, 3) de volumes différents, remplis d'eau de mer et communiquant entre eux pour établir une circulation de l'eau en circuit fermé à travers une unité (6) de traitement de l'eau, caractérisée en ce qu'elle comporte notamment un bassin de plus grand volume (1) constituant une réserve d'eau; un bassin d'élevage de plus petit volume (3) et un bassin de volume intermédiaire (2) servant à réaliser l'équilibre biothermique des circuits d'eau de l'installation, dont le volume total d'eau de l'installation est de cinq à huit fois, de préférence six fois, supérieur au volume d'eau du plus petit bassin (3) dans lequel on élève des poissons.

2. Installation selon la revendication 1, caractérisée en ce que le volume total d'eau de l'installation est de une fois et demi à trois fois, de préférence deux fois, supérieur au volume d'eau du plus grand bassin (1) de réserve d'eau et de trois à cinq fois, de préférence quatre fois, supérieur au volume d'eau du bassin intermédiaire (2), lequel bassin intermédiaire (2) est situé entre le bassin de réserve d'eau (1) et le bassin d'élevage (3) et est rapproché de celui-ci.

3. Installation selon l'une quelconque des revendications 1 ou 2, caractérisée en ce qu'elle comporte plusieurs bassins d'élevage (3) et que le volume total d'eau de l'installation est de cinq à huit fois, de préférence six fois, supérieur à la somme des volumes d'eau desdits bassins (3).

4. Installation selon l'une quelconque des revendications 1 à 3, caractérisée en ce que la profondeur du bassin de réserve d'eau (1) est supérieure à celle du bassin intermédiaire (2), lequel est d'une profondeur supérieure à la profondeur du bassin d'élevage (3) et la communication des bassins entre eux s'effectue à une certaine distance du fond des bassins (1a/2a/3a) pour réserver une zone de décantation des matières lourdes se développant ou étant contenues dans l'eau de l'installation.

5. Installation selon la revendication 4, caractérisée en ce que les bassins (1/2/3) communiquent entre eux par leurs extrémités opposées, de telle sorte que l'eau circule dans le sens longitudinal des bassins, dans des directions opposées d'un bassin à l'autre pour produire un effet lagunaire et favoriser la décantation des matières lourdes contenues dans l'eau de l'installation.

6. Installation selon l'une quelconque des revendications 1 à 5, caractérisée en ce que chacun des bassins (1/2/3) est recouvert d'une bâche (17) en matériau transparent, tendue au-dessus de l'eau et à une distance proche de sa surface pour d'une part éviter les déperditions calorifiques et d'autre part obtenir un apport de calories par effet de serre pendant les périodes d'ensoleillement.

7. Installation selon la revendication 6, caractérisée en ce que les bassins (1/2/3) sont orientés d'Est en Ouest et le bassin intermédiaire (2) et le bassin d'élevage (3) comportent une serre (18) qui recouvre lesdites bâches (17).

8. Installation selon l'une quelconque des revendications 1 à 7, caractérisée en ce que l'unité de traitement de l'eau (6) se compose d'amont en aval:
a)  - d'un bac de décantation (61) qui reçoit l'eau polluée provenant du bassin d'élevage (3);
b)  - d'un régulateur du Ph de l'eau (6$_2$);
c)  - d'un filtre mécanique (6$_3$) pour arrêter les plus grosses particules véhiculées par le courant;
d)  - d'au moins un bac biologique (6$_4$) comportant des éléments filtrants (11b) pour arrêter les plus petites particules et favoriser le développement des bactéries nitrifiantes;
e)  - d'un bassin de réception de l'eau traitée (6$_5$) comportant une conduite de distribution de l'eau (12) pour alimenter le bassin de réserve d'eau (1).

9. Installation selon la revendication 8, caractérisée en ce que l'eau provenant du bac de décantation (6$_1$) surverse sur des coquilles d'huitres (9) pour réguler le Ph de l'eau.

10. Installation selon l'une quelconque des revendications 8 ou 9, caractérisée en ce que le filtre mécanique (6$_3$) est alimenté par le fond par l'eau provenant du régulateur du Ph de l'eau (6$_2$) et comporte plusieurs éléments filtrants (10) parallèles entre eux et espacés les uns des autres et transversalement au courant de l'eau.

11. Installation selon l'une quelconque des revendications 8 à 10, caractérisée en ce que le bac biologique (6$_4$) est alimenté par l'eau provenant du filtre mécanique (6$_3$) et s'écoulant par des surverses disposées à sa partie supérieure et comporte plusieurs éléments filtrants (11) parallèles entre eux, espacés les uns des autres et s'étendant transversalement au courant de l'eau, lesquels se composent chacun de deux grillages (11a/11b) distants l'un de l'autre pour réserver entre eux un espace (E$_1$), le grillage (11a), situé en amont, étant formé de mailles de plus forte section, le grillage (11b), situé en aval, étant formé de mailles de plus petite section et en ce que l'esspace (E$_2$) réservé entre les deux grillages (11a/11b) constitue une zone de contre-courant pour favoriser le développement des bactéries nitrifiantes sur les faces du grillage à petites mailles (11b).

12. Installation selon la revendication 10, caractérisée en ce que le filtre mécanique (6$_3$) se compose d'éléments filtrants (10) formés de grillages à mailles dégressives d'amont en aval allant de 8 mm. à 2,5 mm.

13. Installation selon la revendication 11, caractérisée en ce que les éléments à mailles (11) du filtre biologique (6$_4$) se composent en amont, d'un grillage (11a) formé de mailles de 2,5 mm.,

de préférence 5 mm. et en aval d'un grillage (11) formé de mailles de 0,5 mm. à 2 mm., de préférence 1 mm.

14. Installation selon l'une quelconque des revendications 10 à 13, caractérisée en ce que le filtre mécanique (6$_3$) et/ou le filtre biologique (6$_4$) comportent en outre, en aval desdits éléments à mailles (10) (11), au moins un élément filtrant supplémentaire (10$_1$) (11$_1$), constitué par une plaque de mousse à cellules ouvertes d'une densité comprise entre 0,8 Kg/m$^3$ et 1,2 Kg/m$^3$.

15. Installation selon l'une quelconque des revendications 1 à 14, caractérisée en ce qu'elle comporte un régulateur thermique solaire de la température de l'eau de l'installation, lequel est disposé à la sortie du filtre biologique (6) et rejette l'eau dans au moins un desdits bassins à travers une vanne de régulation reliée à un enregistreur en continu de la température des bassins (1), (2), (3).

16. Installation selon la revendication 15, caractérisée en ce que ledit régulateur solaire se compose d'un boîtier (19) dont le fond (19a$_1$) et les parois latérales (19a$_2$) sont calorifugées et dans lequel sont disposés un collecteur d'arrivée (24) et un collecteur de départ de l'eau (25) reliés l'un à l'autre par une pluralité de tubes (28) de petit diamètre compris entre 5 mm. et 10 mm. de préférence 8 mm., lesquels sont disposés devant la face supérieuré (20) du boîtier, constituée par un couvercle amovible transparent ayant la propriété de garder caprif le rayonnement infrarouge rémanent.

17. Installation selon la revendication 16, caractérisée en ce que lesdits collecteurs (24/25) sont superposés l'un l'autre et que les tubes (28) constituent des boucles en forme d'épingle à cheveux dont les branches (28a/28b) sont décalées l'une par rapport à l'autre pour être en permanence sous le rayonnement solaire.

18. Installation selon la revendication 17, caractérisée en ce que les collecteurs (24/25) sont situés du côté de la partie supérieure du boîtier (19) et s'étendent parallèlement à l'un des bords latéraux et en ce que les épingles (28) sont inclinées du côté du fond du boîtier (19) et s'étendent à partir des collecteurs (24/25) jusqu'à approcher le bord latéral du boîtier opposé à celui devant lequel se trouvent lesdits collecteurs.

19. Procédé d'aquaculture mis en oeuvre dans une installation comprenant au moins trois bassins (1, 2, 3) de volumes différents, remplis d'eau de mer et reliés entre eux pour permettre la circulation de l'eau en circuit fermé à travers une unité (6) de traitement de l'eau, caractérisé en ce que dans ladite installation comprenant:
- au moins un bassin de réserve d'eau (1),
- au moins un bassin intermédiaire (2) servant à réaliser l'équilibre biothermique des circuits d'eau de l'installation,

au moins un bassin d'élevage (3), dont le volume total d'eau de l'installation est de 1,5 à 3 fois, de préférence 2 fois, supérieur au volume d'eau du bassin de réserve d'eau (1); de 3 à 5 fois, de préférence 4 fois, supérieur au volume d'eau du bassin intermédiaire (2) et de 5 à 8 fois, de préférence 6 fois, supérieur au volume d'eau du bassin d'élevage (3),
- on élève conjointement des poissons et des coquillages dans le plus petit bassin (3), lesquels coquillages sont associés aux poissons pour éliminer le phyto-plancton qui se développe naturellement dans l'installation.

20. Procédé selon la revendication 19, caractérisé en ce que, dans une installation d'aquaculture comprenant au moins trois bassins:
- au moins un bassin de réserve d'eau (1),
- au moins un bassin intermédiaire (2),
- au moins un bassin d'élevage (3) dont le volume total d'eau de l'installation est de 1,5 à 3 fois, de préférence, 2 fois supérieur au volume d'eau du bassin de réserve d'eau; de 3 à 5 fois, de préférence 4 fois, supérieur au volume d'eau du bassin intermédiaire (2) et de 5 à 8 fois, de préférence 6 fois, supérieur au volume d'eau du bassin d'élevage (3),
- on élève conjointement des poissons et des coquillages dans le plus petit des bassins (3),
- et on élève des coquillages dans le bassin intermédiaire (2).

21. Procédé selon l'une quelconque des revendications 19 ou 20, caractérisé en ce que, conjointement aux poissons, on élève des bivalves.

22. Procédé selon l'une quelconque des revendications 19 à 21, caractérisé en ce que l'on maintient le Ph de l'eau à une valeur comprise dans la fourchette de 7,5 à 8,5, de préférence 7,68 à 8,34.

23. Procédé selon la revendication 22, caractérisé en ce que l'on maintient le Ph de l'eau en la mettant au contact des coquilles d'huitres.

**Patentansprüche**

1. Aquakultur-Einrichtung umfassend mindestens drei Becken (1, 2, 3) von unterschiedlichem Volumen, die mit Meerwasser gefüllt sind und zur Herstellung eines Wasserkreislaufs in geschlossenem Kreis durch eine Wasseraufbereitungseinheit (6) miteinander kommunizieren, dadurch gekennzeichnet, daß sie insbesondere ein eine Wasserreserve darstellendes Becken (1) größeren Volumens, ein Aufzuchtbecken (3) kleineren Volumens und ein Becken (2) mittleren Volumens, das zur Herstellung des biothermischen Gleichgewichts der Wasserkreisläufe der Einrichtung dient, umfaßt, wobei das Wassergesamtvolumen der Einrichtung fünf- bis achtmal, vorzugsweise sechsmal, so groß ist wie das Wasservolumen des kleineren Beckens (3), in welchem Fische gezüchtet werden.

2. Einrichtung nach Anspruch 1, dadurch gekennzeichnet, daß das Wassergesamtvolumen der Einrichtung eineinhalb bis dreimal, vorzugsweise zweimal, so groß ist wie das Wasservolumen des größeren Beckens (1) zur Wasserreserve und drei- bis fünfmal, vorzugsweise viermal, so groß ist wie das Wasservolumen des Zwischenbeckens (2), welches Zwischenbecken (2) sich zwischen dem Wasserreservebecken (1) und dem Aufzuchtbecken (3) befindet und näher zu letzterem liegt.

3. Einrichtung nach einem der Ansprüche 1 oder 2, dadurch gekennzeichnet, daß sie mehrere Aufzuchtbecken (3) umfaßt, und daß das Wassergesamtvolumen der Einrichtung fünf- bis achtmal, vorzugsweise sechsmal, so groß ist wie die Summe der Wasservolumen dieser Becken (3).

4. Einrichtung nach einem der Ansprüche 1 bis 3, dadurch gekennzeichnet, daß die Tiefe des Wasserreservebeckens (1) größer ist als jene des Zwischenbeckens (2), welches eine größere Tiefe aufweist als das Aufzuchtbecken (3), und daß die Kommunikation der Becken untereinander in einer bestimmten Entfernung der Beckenböden (1a/2a/3a) erfolgt, um eine Dekantierzone für schwere Stoffe, die sich im Wasser der Einrichtung bilden bzw. dort enthalten sind, freizuhalten.

5. Einrichtung nach Anspruch 4, dadurch gekennzeichnet, daß die Becken (1/2/3) an ihren gegenüberliegenden Enden derart miteinander kommunizieren, daß das Wasser in Längsrichtung der Becken von einem Becken in das andere in entgegengesetzten Richtungen zirkuliert, um einen Laguneneffekt zu erzeugen und die Dekantierung der im Wasser der Einrichtung enthaltenen schweren Stoffe zu begünstigen.

6. Einrichtung nach einem der Ansprüche 1 bis 5, dadurch gekennzeichnet, daß jedes der Becken (1/2/3) mit einer Plane (17) aus transparentem Material überdeckt ist, die über dem Wasser in einer geringen Entfernung von dessen Oberfläche gespannt ist, um einerseits Wärmeverluste zu vermeiden und andererseits während der Sonnenbestrahlungsperioden eine Wärmezufuhr durch Glashauseffekt zu erzielen.

7. Einrichtung nach Anspruch 6, dadurch gekennzeichnet, daß die Becken (1/2/3) von Osten nach Westen gerichtet sind und das Zwischenbecken (2) und das Aufzuchtbecken (3) ein Glashaus (18) umfassen, welches die Planen (17) überdeckt.

8. Einrichtung nach einem der Ansprüche 1 bis 7, dadurch gekennzeichnet, daß sich die Wasseraufbereitungseinheit (6) stromaufwärts nach stromabwärts wie folgt zusammensetzt:
a)   aus einem Dekantationskasten ($6_1$) zur Aufnahme des vom Aufzuchtbecken (3) kommenden verunreinigten Wassers;
b)   aus einem Wasser-pH-Regulator ($6_2$);
c)   aus einem mechanischen Filter ($6_3$) zum Aufhalten der größeren vom Strom mitgeführten Teilchen;
d)   aus mindestens einem biologischen Kasten ($6_4$), der Filterelemente (11b) zum Aufhalten der kleineren Teilchen und zur Förderung der Bildung von nitrifizierenden Bakterien umfaßt;

e) aus einem Aufnahmebecken (6₅) für das aufbereitete Wasser, welches eine Wasserverteilerleitung (12) zum Speisen des Wasserreservebeckens (1) umfaßt.

9. Einrichtung nach Anspruch 8, dadurch gekennzeichnet, daß das vom Dekantationskasten (6₁) kommende Wasser zur Einstellung des pH des Wassers über Austernmuscheln (9) fließt.

10. Einrichtung nach einem der Ansprüche 8 oder 9, dadurch gekennzeichnet, daß der mechanische Filter (6₃) über den Boden mit vom Wasser-pH-Regulator (6₂) kommendem Wasser gespeist ist und mehrere zueinander parallele und voneinander im Abstand und quer zum Wasserstrom angeordnete Filterelemente (10) umfaßt.

11. Einrichtung nach einem der Ansprüche 8 bis 10, dadurch gekennzeichnet, daß der biologische Kasten (6₄) mit vom mechanischen Filter (6₃) kommendem und über in seinem oberen Teil angeordnete Überläufe fließendem Wasser gespeist ist und mehrere zueinander parallele Filterelemente (11) umfaßt, die voneinander im Abstand angeordnet sind und sich quer zum Wasserstrom erstrecken und von denen jedes aus zwei im Abstand voneinander befindlichen und zwischen ihnen einen Raum (E₁) freilassenden Gittern (11a/11b) zusammengesetzt ist, wobei das stromaufwärts befindliche Gitter (11a) von Maschen größeren Querschnitts und das stromabwärts befindliche Gitter (11b) von Maschen kleineren Querschnitts gebildet ist, und daß der zwischen den beiden Gittern (11a/11b) freigelassene Raum (E₂) eine Gegenstromzone zur Förderung der Bildung von nitrifizierenden Bakterien an den Flächen des Gitters mit den kleineren Maschen (11b) darstellt.

12. Einrichtung nach Anspruch 10, dadurch gekennzeichnet, daß der mechanische Filter (6₃) aus Filterelementen (10) besteht, die durch Gitter mit von stromaufwärts nach stromabwärts von 8 mm auf 2,5 mm abnehmenden Maschen gebildet sind.

13. Einrichtung nach Anspruch 11, dadurch gekennzeichnet, daß die Elemente (11) mit Maschen des biologischen Filters (6₄) stromaufwärts aus einem durch Maschen von 2,5 mm, vorzugsweise 5 mm, gebildeten Gitter (11a) und stromabwärts aus einem durch Maschen von 0,5 mm bis 2 mm, vorzugsweise 1 mm, gebildeten Gitter (11) bestehen.

14. Einrichtung nach einem der Ansprüche 10 bis 13, dadurch gekennzeichnet, daß der mechanische Filter (6₃) und/oder der biologische Filter (6₄) weiters stromabwärts der Maschenelemente (10) (11) mindestens ein zusätzliches Filterelement (10₁) (11₁) umfassen, welche durch eine Platte aus Schaum mit offenen Zellen einer Dichte zwischen 0,8 kg/m³ und 1,2 kg/m³ gebildet sind.

15. Einrichtung nach einem der Ansprüche 1 bis 14, dadurch gekennzeichnet, daß sie einen Solar-Wärmeregulator für die Wassertemperatur der Einrichtung umfaßt, welcher am Ausgang des biologischen Filters (6) angeordnet ist und das Wasser in mindestens eines der Becken durch ein Regulationsventil getrieben wird, welches mit einem Endlosschreiber für die Temperatur der Becken (1), (2), (3) verbunden ist.

16. Einrichtung nach Anspruch 15, dadurch gekennzeichnet, daß der Solar-Regulator durch ein Gehäuse (19) gebildet ist, dessen Boden (19a₁) und Seitenwände (19a₂) wärmegedämmt sind und in welchem ein Eintrittskollektor (24) und ein Austrittskollektor (25) für das Wasser angeordnet sind, die durch eine Mehrzahl von Rohren (28) von einem kleinen Durchmesser zwischen 5 mm und 10 mm, vorzugsweise 8 mm, miteinander verbunden sind, wobei die Rohre vor der Oberseite (29) des Gehäuses angeordnet sind, welche durch einen transparenten abnehmbaren Deckel mit der Eigenschaft, die remanente Infrarotstrahlung eingefangen zu halten, gebildet ist.

17. Einrichtung nach Anspruch 16, dadurch gekennzeichnet, daß die Kollektoren (24/25) übereinander angeordnet sind, und daß die Rohre (28) haarnadelförmige Schleifen bilden, deren Zweige (28a/28b) zueinander versetzt sind, um permanent unter Sonneneinstrahlung zu stehen.

18. Einrichtung nach Anspruch 17, dadurch gekennzeichnet, daß die Kollektoren (24/25) auf der Seite des oberen Teils des Gehäuses (19) gelagert sind und sich parallel zu einem der Seitenränder erstrecken, und daß die Haarnadeln (28) auf der Seite des Bodens des Gehäuses (19) geneigt sind und sich von den Kollektoren (24/25) bis nahe dem Seitenrand des Gehäuses erstrecken, der jenem, vor der sich die Kollektoren befinden, gegenüberliegt.

19. Aquakultur-Verfahren zur Anwendung in einer Einrichtung, umfassend mindestens drei Becken (1, 2, 3) von unterschiedlichem Volumen, die mit Meerwasser gefüllt sind und zur Herstellung eines Wasserkreislaufs in geschlossenem Kreis durch eine Wasseraufbereitungseinheit (6) miteinander verbunden sind, dadurch gekennzeichnet, daß man in der Einrichtung, umfassend

- mindestens ein Wasserreservebecken (1),
- mindestens ein Zwischenbecken (2), das zur Herstellung des biothermischen Gleichgewichts der Wasserkreisläufe der Einrichtung dient, und
- mindestens ein Aufzuchtbecken (3), wobei das Wassergesamtvolumen der Einrichtung eineinhalb bis dreimal, vorzugsweise zweimal, so groß ist wie das Wasservolumen des Wasserreservebeckens (1), drei- bis fünfmal, vorzugsweise viermal, so groß ist wie das Wasservolumen des Zwischenbeckens (2) und fünf- bis achtmal, vorzugsweise sechsmal, so groß wie das Wasservolumen des Aufzuchtbeckens (3) ist,
- im kleineren Becken (3) gemeinsam Fische und Muscheln aufzieht, wobei die Muscheln mit den Fischen zur Beseitigung des Phytoplanktons, der natürlicherweise in der Einrichtung entsteht, vereint sind.

20. Verfahren nach Anspruch 19, dadurch gekennzeichnet, daß man in einer Aquakultur-Einrichtung, umfassend mindestens drei Becken, u.zw.
- mindestens ein Wasserreservebecken (1),
- mindestens ein Zwischenbecken (2),
- mindestens ein Aufzuchtbecken (3), wobei das Wassergesamtvolumen der Einrichtung eineinhalb- bis dreimal, vorzugsweise zweimal, so groß ist wie das Wasservolumen des Wasserreservebeckens, drei- bis fünfmal, vorzugsweise viermal, so groß ist wie das Wasservolumen des Zwischenbeckens (2) und fünf- bis achtmal, vorzugsweise sechsmal, so groß ist wie das Wasservolumen des Aufzuchtbeckens (3),
- im kleineren Becken (3) gemeinsam Fische und Muscheln aufzieht, und
- im Zwischenbecken (2) Muscheln aufzieht.

21. Verfahren nach einem der Ansprüche 19 oder 20, dadurch gekennzeichnet, daß man gemeinsam mit den Fischen zweischalige Tiere aufzieht.

22. Verfahren nach einem der Ansprüche 19 bis 26, dadurch gekennzeichnet, daß man den pH des Wassers auf einem Wert innerhalb eines Bereichs von 7,5 bis 8,5, vorzugsweise 7,68 bis 8,34, hält.

23. Verfahren nach Anspruch 22, dadurch gekennzeichnet, daß man den pH des Wassers aufrecht hält, indem man es in Kontakt mit Austernmuscheln bringt.

## Claims

1. Aquaculture installation comprising at least three tanks (1, 2, 3) of different volumes filled with sea water and communicating one with the other in order to create a closed-circuit circulation of water through a water-treatment unit (6), characterized in that it comprises in particular a tank of larger volume (1) constituting a water reserve; a breeding tank of smaller volume (3) and a tank of intermediate volume (2) designed to create a biothermic equilibrium of the installation water circuits, the total water volume of the installation being from five to eight times, and preferably six times, greater than the water volume of the smallest tank (3) in which fishes are bred.

2. Installation according to claim 1, characterized in that the total water volume of the installation is from one and a half time to three times, preferably twice, greater than the water volume of the largest tank (1) of water reserves and from three to five times, preferably four times, greater than the water volume of the intermediate tank (2), which intermediate tank (2) is situated between the water reserve tank (1) and the breeding tank (3) and is closer to the latter.

3. Installation according to any one of claims 1 or 2, characterized in that it comprises a plurality of breeding tanks (3) and in that the total water volume of the installation is from five to eight times, preferably six times, greater than the sum of the water volume of said tanks (3).

4. Installation according to any one of claims 1 to 3, characterized in that the depth of the water reserve tank (1) is greater than that of the intermediate tank (2), the depth of which is greater than the depth of the breeding tank (3) and the communication between the tanks is achieved at a certain distance from the tanks bottom (1a/2a/3a) in order to reserve a zone for the decantation of the heavy materials developing or being contained in the installation water.

5. Installation according to claim 4, characterized in that the tanks (1/2/3) communicate one with the other via their opposite ends, so that the water circulates in the longitudinal direction of the tanks, in opposite directions from one tank to the other, in order to produce a lagoonal effect and promote the decantation of the heavy materials contained in the installation water.

6. Installation according to any one of claims 1 to 5, characterized in that each of the tanks (1/2/3) is covered with a tilt (17) in transparent material, stretched above the water and at a distance close to its surface in order, on the one hand, to avoid heat losses and on the other hand, to obtain a heat supply by greenhouse effect during sunshine periods.

7. Installation according to claim 6, characterized in that the tanks (1/2/3) are oriented east to west and the intermediate tank (2) and the breeding tank (3) comprise a greenhouse (18) covering said tilts (17).

8. Installation according to any one of claims 1 to 7, characterized in that the water-treatment unit (6) is constituted upstream to downstream:
a) of a decantation vat ($6_1$) receiving the polluted water flowing from the breeding tank (3);
b) water pH regulator ($6_2$);
c) mechanical filter ($6_3$) for stopping the largest particles conveyed by the current;
d) at least one biological vat ($6_4$) comprising filtering elements (11b) for stopping the smallest particles and promoting the development of the nitrogenfixing bacteria;
e) tank for receiving the treated water ($6_5$) comprising a water distributing duct (12) for supplying the water reserve tank (1) with water.

9. Installation according to claim 8, characterized in that the water flowing from the decantation vat ($6_1$) overflows on oyster shells (9) for regulating the water pH.

10. Installation according to any one of claims 8 or 9, characterized in that the mechanical filter ($6_3$) is supplied through the bottom with water flowing from the water pH regulator ($6_2$) and comprises a plurality of filtering elements (10) parallel one to the other and spaced apart transversely to the flowing direction of the water.

11. Installation according to any one of claims 8 to 10, characterized in that the biological tank ($6_4$) is supplied with water coming from the mechanical filter ($6_3$) and flowing via overflowing holes situated at its upper part and comprising a plurality of filtering elements (11) parallel one to the other and spaced apart and extending transversely to the flowing direction of the water, which filtering elements are each constituted of two nettings (11a/11b) separate one from the other to define therebetween a space ($E_1$), the netting (11a) situated upstream being constituted of meshes of wider section, the netting (11b) situated downstream being constituted of meshes of smaller section and in that the space ($E_2$) defined between the two nettings (11a/11b) constitutes a zone of countercurrent for promoting the development of nitrogen-fixing bacteria on the faces of the small-meshed netting (11b).

12. Installation according to claim 10, characterized in that the mechanical filter ($6_3$) is constituted of filtering elements (10) formed of nettings having meshes decreasing upstream to downstream, from 8 mm to 2.5 mm.

13. Installation according to claim 11, characterized in that the mesh elements (11) of the biological filter ($6_4$) are constituted upstream of a netting (11a) constituted of meshes of 2.5 mm, preferably 5 mm and downstream of a netting constituted of meshes of 0.5 mm to 2 mm, preferably 1 mm.

14. Installation according to any one of claims 10 to 13, characterized in that the mechanical filter ($6_3$) and/or the biological filter ($6_4$) further comprise, downstream of said mesh elements (10) (11), at least one additional filtering element ($10_1$) ($11_1$), constituted by a foam plate having open cells of density comprised between 0.8 kg/m$^3$ and 1.2 kg/m$^3$.

15. Installation according to any one of claims 1 to 14, characterized in that it comprises a solar thermal regulator regulating the temperature of the installation water, which is placed at the outlet of the biological filter (6) and rejects the water in at least one of the tanks via a regulating valve connected to a recorder continuously recording the temperature of the tanks (1), (2), (3).

16. Installation according to claim 15, characterized in that said solar regulator is constituted of a casing (19) the bottom ($19a_1$) and the lateral walls ($19a_2$) of which are heat insulated and in which are placed: a water intake collector (24) and a water outlet collector (25) connected one to the other by a plurality of tubes (28) of small diameter comprised between 5 mm and 10 mm, preferably 8 mm, said collectors being arranged in front of the upper face (20) of the casing, constituted by a transparent removable cover capable of holding in the remanent infrared radiation.

17. Installation according to claim 16, characterized in that said collectors (24/25) are superimposed one on the other and in that the tubes (28) constitute hair-pin shaped loops, the branches (28a/28b) of which are shifted one with respect to the other in order to be permanently under the solar radiation.

18. Installation according to claim 17, characterized in that the collectors (24/25) are situated on the side of the upper part of the casing (19) and extend in parallel to one of the lateral edges and in that the loops (28) are inclined on the side of the casing bottom (19) and extend from the collectors (24/25) until they reach the lateral edge of the casing opposite that in front of which are placed said collectors.

19. Aquaculture process used in an installation comprising at least three different tanks (1, 2, 3) having different volumes filled with sea water and connected one to the other in order to allow the closed circuit water circulation through a water-treatment unit (12), characterized in that said installation comprising:
- at least one water reserve tank (1),
- at least one intermediate tank (2) designed to achieve the biothermic equilibrium of the installation water circuits,
- at least one breeding tank (3),
  has a total water volume which is between 1.5 and three times, preferably twice, greater than the water volume of the water reserve tank (1); from 3 to 5 times, preferably 4 times, greater than the water volume of the intermediate tank (2) and from 5 to 8 times, preferably 6 times, greater than the water volume of the breeding tank (3),
- in that fishes and shell-fishes are bred together in the smallest tank (3), which shell-fishes are associated with the fishes to remove the phyto-plankton which naturally develops in the installation.

20. Process according to claim 19, characterized in that, in an aquaculture installation comprising at least three tanks:
- at least a water reserve tank (1),
- at least one intermediate tank (2),
- at least one breeding tank (3), the total water volume of the installation is from 1.5 times to 3 times, preferably twice, greater than the water volume of the water reserve tank; from 3 to 5 times, preferably 4 times, greater than the water volume of the intermediate tank (2) and from 5 to 8 times, preferably six times, greater than the water volume of the breeding tank (3),
- and in that fishes and shell-fishes are bred together in the smallest tank (3),
- shell-fishes are bred in the intermediate tank (2).

21. Process according to any one of claims 19 or 20, characterized in that bivalves are bred with fishes.

22. Process according to any one of claims 19 to 21, characterized in that the water pH is maintained at a value ranging between 7.5 and 8.5, preferably 7.68 and 8.34.

23. Process according to claim 22, characterized in that the water pH is maintained by contact of the water with oyster shells.

**Fig. 1**

**Fig. 2**

0 086 168

Fig. 3

Fig. 4

3

Fig.5

Fig.6